Europäisches Patentamt

European Patent Office

Office européen des brevets

(11) Publication number: **0 258 037**
**A2**

## EUROPEAN PATENT APPLICATION

(21) Application number: **87307505.5**

(22) Date of filing: **25.08.87**

(51) Int. Cl.⁴: **A 23 K 1/00**
**A 23 K 1/18**

(30) Priority: **26.08.86 GB 8620598**

(43) Date of publication of application:
**02.03.88 Bulletin 88/09**

(84) Designated Contracting States:
**AT BE CH DE ES FR GB GR IT LI LU NL SE**

(71) Applicant: **Mars G.B. Limited**
**143-149 Fenchurch Street**
**London EC3M 6BN (GB)**

(72) Inventor: **Froebel, Roland Arthur**
**12 St. Christophers Drive**
**Addingham West Yorkshire LS29 9RJ (GB)**

**Saric, Krunoslav**
**Roggenkamp 17**
**2810 Verden/Aller (DE)**

(74) Representative: **Colgan, Stephen James et al**
**CARPMAELS & RANSFORD 43 Bloomsbury Square**
**London WC1A 2RA. (GB)**

(54) Co-extruded semi-moist food product.

(57) A co-extruded semi-moist food product is provided which is especially suited for use as a dog treat. The product comprises an inner core which is at least partially covered by at least one distinguishable layer. A method of manufacturing such as food product is also provided.

EP 0 258 037 A2

**Description**

## CO-EXTRUDED SEMI-MOIST FOOD PRODUCT

This invention relates to a co-extruded semi-moist food product and, in particular, to a co-extruded semi moist pet food product which is especially suited for use as a dog treat.

Pet foods intended for consumption by dogs or cats are currently manufactured in three distinct types, that is, canned foods, dry or semi-dry foods and semi-moist or intermediate moisture products.

Canned foods consist essentially of meat or mixtures of meat and cereal having a meat-like texture and have a high moisture content, typically in the range of 70-80%. Such canned foods generally have a high animal acceptance, probably because of their natural moisture and high meat content which produce an attractive texture, consistency and aroma. However, the high moisture content of such products requires that they be heat sterilised in hermetically sealed containers, such as cans, to inhibit spoilage and thus provide a reasonably long shelf-life. Heat sterilisation of this type is a costly process and thus increases the cost of the product. Moreover, since such products readily support the growth of microbiological organisms in non-sterile conditions, it is essential that the content of such a can be consumed quickly or stored under refrigeration once it has been opened otherwise the product will deteriorate very rapidly.

Dry or semi-dry foods consist of mixtures of meat and/or meat meal and cereals and have a low moisture content, typically below 12%, and consequently a hard and crunchy texture. Such foods generally have a very high nutritional and calorific value and are thus capable of providing a complete balanced diet for the animal. Moreover, they have a good storage life because of their low moisture content and can thus be packed in relatively inexpensive packaging, such as paper or cardboard containers. On the other hand, such foods generally have a low animal palatability because of their hard, dry texture. Indeed, such foods are often completely rejected unless suitable liquids are added prior to consumption and, in some cases, even liquid addition does not increase palatability because it causes disintegration of the product into a slushy, unappealing condition which may still be rejected by the animal. Attempts have been made to increase the palatability of such dry and semi-dry products by coating them with a meat slurry. However, although this technique has improved the animal acceptance of such products, the texture of such coated products remains hard and therefore far from fully acceptable.

Semi-moist or intermediate moisture products consist of mixtures of meat, protein meals and cereals and have a moisture content in the range of 15-35% which gives such products a soft, moist texture similar to that of natural cooked meat. These products generally have a high calorific density and good nutritional value. Preservation of such products is achieved by the addition of humectants, such as sugars and polyhydric alcohols, particularly propylene glycol, which bind water and thus reduce the water activity of the products to a level at which bacteria are unable to grow, and an antimycotic agent, such as potassium sorbate, which inhibits the growth of yeasts and moulds. The use of propylene glycol as a humectant is particularly beneficial in that propylene glycol also has antimycotic properties and is very effective in killing many viruses including influenza, polio and FMD viruses. Moreover, it has been found that at the pH and water activity level of such semi-moist products, the propylene glycol acts synergistically with the potassium sorbate to provide a bacteriostatic effect. However, although the animal acceptance of such semi-moist products is higher than that of dry foods, the added preservatives are not palatable to some animals.

In addition to the three categories outlined above, pet foods, particularly dog foods, can be divided into two further subclasses, that is, foods designed as main meals and foods designed as treats, that is, snacks that can be given to a pet between main meals, for instance, as a reward. Main meal foods have been produced in all three of the types described above. However, traditionally, treats have been manufactured mainly as dry products, such as biscuits, or chocolate drops. Some semi-moist treats have been produced but these have not made any significant impact on the market.

Dry products, as discussed above, have a low animal palatability and chocolate drops, although having a high animal acceptance, have a low nutritional value which may deter health-conscious pet-owners from giving such items to their pet. Clearly, canned goods are unsuitable for use as treats because they are messy to handle, due to their high moisture content, and must be consumed quickly once the can has been opened, due to the storage problems discussed above, hence they do not lend themselves to distribution in small quantities. Semi-moist products are clearly easier to handle and store than canned foods. However, as discussed above, known semi-moist foods are not palatable to some animals because these animals can readily detect the preservatives in the product.

It is thus an object of the present invention to provide a highly palatable pet food which may be used as a treat, has good storage and handling characteristics and has a high nutritional value.

According to the invention there is therefore provided a co-extruded semi-moist food product comprising an inner core at least partially covered by at least one distinguishable layer.

It is preferred that the inner core be rich in vitamins and minerals, preferably containing sufficient vitamins and minerals to satisfy the requirements for adult maintenance of the consumer. When the consumer is to be a dog, it is preferred that the inner core contains 0.2-0.6% by weight of a suitable vitamin and mineral mix. It is also preferred that the inner core has a soft texture and is of a contrasting colour with respect to the or each covering layer.

Preferably, the food product has an outer layer containing 35-55% by weight of meat or meat by-products and, more preferably, 50-55%. It is also preferred that the outer layer has a meat-like surface texture and a fibrous overall texture and is a dark red-brown colour.

In its most preferred form the food product comprises an inner core and a single outer layer, the ratio by weight of the inner core to the outer layer preferably being 2:3. Preferably, the inner core and outer layer contain the following ingredients on a dry weight basis:-

|  | % of Inner core | % of Outer core |
|---|---|---|
| Meat and meat by-products: | 20 - 35% | 35 - 55% |
| Farinaceous products: | 40 - 55% | 15 - 35% |
| Edible oils: | 2 - 7% | 2 - 7% |

It is also preferred that the edible oils are vegetable oils.

Preferably, the food product further includes 15-25% by weight of the whole product of at least one humectant which is preferably selected from sugar, salt and propylene glycol. It is also preferred that the food product further includes 0.2-0.5% by weight of the whole product of an antimycotic agent, preferably potassium sorbate.

It is further preferred that the food product be in the form of a cylinder or flattened cylinder and have a moisture content in the range of 15-25% by weight or, more preferably, 18-22% by weight.

According to the invention there is also provided a method of manufacturing a food product of the type described above which includes the step of co-extruding the inner core and the or each layer.

Some embodiments of the present invention are illustrated in the following examples. All percentages are by weight unless otherwise specified.

## EXAMPLE 1

### Ingredients

| Inner Core | % of Inner Core |
|---|---|
| Meat and meat by-products | 25.00 |
| Farinaceous products | 47.00 |
| Edible Oils | 5.00 |
| Humectants | 19.80 |
| Potassium sorbate | 0.30 |
| Glycerol | 2.00 |
| Colourings | 0.50 |
| Vitamins | 0.20 |
| Minerals | 0.20 |

| Outer Layer | % of Outer Layer |
|---|---|
| Meat and meat by-products | 35.00 |
| Farinaceous products | 34.05 |
| Edible Oils | 5.00 |
| Humectants | 19.80 |
| Potassium sorbate | 0.30 |
| Glycerol | 2.00 |
| Additional fibre | 0.50 |
| Casein | 3.00 |
| Colourings | 0.15 |
| Flavourings | 0.20 |

The meat intended for the inner core was taken in a frozen state and subjected to pre-breaking before being passed through a Laska mincer fitted with a 5mm plate. The minced meat was then transferred to a Wolf King mixer/mincer fitted with a 3mm plate where it was blended with the other ingredients to form a dough and then minced. The ingredients of the outer layer were treated in an exactly similar way to form a second minced dough and the two doughs were then fed into a co-extruder and extruded onto a moving belt in the form of a strip having a width of 4cm and a depth of 1cm. The strip was baked by passing it on the belt through a tunnel oven at temperatures in the order of 160° to 220°C and then cooled. The cooled strip was then cut into smaller strips of one metre in length using a guillotine and the cut strips collected and slit into 1cm long pieces using rotary knives. The pieces were then packaged in units of 150g containing about twenty-five pieces for retail as a dog treat.

The finished product had a moisture content of 20% and consisted of an off-white core with a soft texture encased in a tubular, dark red-brown outer layer having a rippled surface and a fibrous texture similar to that of natural cooked meat.

EXAMPLE 2

Ingredients

| Inner Core | % of Inner Core |
|---|---|
| Meat and meat by-products | 25.00 |
| Farinaceous products | 47.00 |
| Edible Oils | 5.00 |
| Humectants | 19.80 |
| Potassium sorbate | 0.30 |
| Glycerol | 2.00 |
| Colourings | 0.50 |
| Vitamins | 0.20 |
| Minerals | 0.20 |

| Outer Layer | % of Outer Layer |
|---|---|
| Meat and meat by-products | 50.00 |
| Farinaceous products | 21.05 |
| Edible Oils | 3.00 |
| Humectants | 19.80 |
| Potassium sorbate | 0.30 |
| Glycerol | 2.00 |
| Additional fibre | 0.50 |
| Casein | 3.00 |
| Colourings | 0.15 |
| Flavourings | 0.20 |

The procedure of Example 1 was repeated using the above ingredients except that the cooled strip was cut into 8cm long bars weighing 40-45g each which were then individually packaged for retail as a dog treat.

The final product had a moisture content of 20% and consisted of an off-white core with a soft texture encased in a tubular, dark red-brown outer layer having a rippled, slightly sticky surface and a fibrous texture.

## EXAMPLE 3

Ingredients

| Inner Core | % of Inner Core |
|---|---|
| Meat and meat by-products | 25.00 |
| Farinaceous products | 47.00 |
| Edible Oils | 5.00 |
| Humectants | 19.80 |
| Potassium sorbate | 0.30 |
| Glycerol | 2.00 |
| Colourings | 0.50 |
| Vitamins | 0.20 |
| Minerals | 0.20 |

| Outer Layer | % of Outer Layer |
|---|---|
| Meat and meat by-products | 50.00 |
| Farinaceous products | 19.67 |
| Edible Oils | 5.00 |
| Humectants | 19.80 |
| Potassium sorbate | 0.30 |
| Glycerol | 2.00 |
| Additional fibre | 0.45 |
| Casein | 2.33 |
| Colourings | 0.15 |
| Flavourings | 0.20 |
| Raising Agent | 0.10 |

The procedure of Example 1 was repeated using the above ingredients.

The final product had a moisture content of 20% and consisted of an off-white core with a soft texture encased in a tubular, dark red-brown outer layer having a rippled surface, fibrous texture and meaty aroma.

In the above Examples, the term "meat" is used not only to refer to the flesh of cattle, swine and sheep but also to the flesh of other mammals, poultry and fish. The term "meat by-products" refers to those non-rendered parts of the carcasses of slaughtered animals such as liver, kidney, heart, spleen, tongue, trimmings, lungs and skins and meat meals made from, for instance, ground bones, tendons and the like.

The term "farinaceous products" is used to refer to foodstuffs containing a high proportion of starch and/or starch-like materials such as cereal grains and meals or flours obtained by grinding cereal grains such as corn, oats, wheat, barley, maize, and rice. It also includes some leguminous plants such as soybeans, navy beans and the like and their derivatives such as soya flour.

The "edible oils" may be vegetable oils, such as those obtained from soybeans, sunflower seeds, safflower seeds, cotton seed, rape seed or linseed, or may be derived from animal fats. Vegetable oils are preferred because their composition helps to balance the fatty acids present in the final product. Also, many vegetable oils contain linoleic acid which is important for the maintenance of a glossy coat for dogs.

The term "humectants" is used to describe compounds which possess the ability to bind water and thus reduce the water activity of the final product to a level at which bacteria are unable to grow. Examples of such compounds include sugar, salt and polyhydric alcohols, such as propylene glycol. The use of propylene glycol is particularly advantageous because, as previously discussed, it acts synergistically with the antimycotic agent potassium sorbate to provide a bacteriostatic effect.

Glycerol may be included in both the inner core and outer layer ingredients because it has the dual effect of improving the texture of the final product and aiding extrusion. Additional fibre, for instance, in the form of a cellulose derivative, may be added to the outer layer to increase the fibrosity of that layer and thus produce a more meat-like texture.

To ensure that the final product supplies a complete and nutritionally balanced diet, vitamins and minerals are added to the inner core and casein to the outer layer. Ideally, minerals and vitamins should be added in a quantity sufficient to meet the requirements for adult maintenance of the animal for which the product is intended. Casein, which is a protein obtained from milk, is added because it contains different amino acids to those found in farinaceous products and thus enables a correctly balanced protein profile to be obtained.

Normal food additives such as colourings and flavourings may also be added to increase the palatability of the final product. Suitable colourings include titanium dioxide and iron oxide. In some cases, it may also be desirable to add a raising agent such as sodium or ammonium bicarbonate.

The meat-like texture of the product is influenced by the addition of milk proteins, e.g. caseinates. The latter also have a second function, namely to hold water, which can positively enhance the freshness of the product.

Comparative palatability tests were also carried out between two-layer products of the present invention, produced according to Example 1 and a leading conventional meat based dog treat known to have high palatability.

In these tests, thirty-eight dogs, comprising twenty-six West Highland White Terriers, seven Cairn Terriers, four Dachshunds and one Labrador, were offered a conventional treat and a treat according to the present invention and the first eaten was recorded.

A total of forty-eight choice tests were carried out with ten dogs undertaking the choice on two separate occasions. On forty occasions the treat of the present invention was eaten first, on six occasions the conventional treat was eaten first and on two occasions both treats were refused.

Thus, it would appear that the products of the present invention have a high palatability and are greatly preferred by dogs to the conventional treats. Unlike conventional semi-moist products, the dogs did not seem to be deterred by the presence of the necessary preservatives and it is thought that this is because the smell of the preservatives is disguised by the relatively high concentration of meat and meat by-products in the outer layer.

It will of course be understood that the present invention has been described above purely by way of example, and modifications of detail can be made within the scope of the invention. For instance, although the present invention has been specifically described in the context of pet foods, particularly dog treats, and is especially suited for such use, it will of course be understood that the food products of the present invention may also be formulated for human consumption.

## Claims

1. A co-extruded semi-moist food product comprising an inner core at least partially covered by at least one distinguishable layer.

2. A food product according to claim 1 in which the inner core contains 0.2 - 0.6% by weight of a vitamin and mineral mix.

3. A food product according to claim 1 or claim 2 in which the inner core has a soft texture.

4. A food product according to any preceding claim in which the inner core is of a contrasting colour with respect to the or each layer.

5. A food product according to any preceding claim which has an outer layer containing 35-55% by weight of meat or meat by-products.

6. A food product according to claim 5 in which the outer layer contains 50-55% by weight of meat or meat by-products.

7. A food product according to claim 5 or claim 6 in which the outer layer has a meat-like surface texture.

8. A food product according to any one of claims 5, 6 and 7 in which the outer layer has a fibrous texture.

9. A food product according to any one of claims 5 to 8 in which the outer layer is a dark red-brown colour.

10. A food product according to any preceding claim which comprises an inner core and a single outer layer.

11. A food product according to claim 10 in which the ratio by weight of the inner core to the outer layer is 2:3.

12. A food product according to claim 10 or claim 11 in which the inner core and outer layer contain the following ingredients on a dry weight basis:-

|  | % of Inner core | % of Outer core |
|---|---|---|
| Meat and meat by-products: | 20 – 35% | 35 – 55% |
| Farinaceous products: | 40 – 55% | 15 – 35% |
| Edible oils: | 2 – 7% | 2 – 7% |

13. A food product according to claim 12 in which the edible oils are vegetable oils.

14. A food product according to claim 12 or claim 13 which further includes 15-25% by weight of the whole product of at least one humectant.

15. A food product according to claim 14 in which the or each humectant is selected from sugar, salt and propylene glycol.

16. A food product according to any one of claims 12 to 15 which further includes 0.2-0.5% by weight of the whole product of an antimycotic agent.

17. A food product according to claim 16 in which the antimycotic agent is potassium sorbate.

18. A food product according to any preceding claim in the form of a cylinder or flattened cylinder.

19. A food product according to any preceding claim which has a moisture content in the range of 15-25% by weight.

20. A food product according to claim 19 in which the moisture content is 20-22% by weight.

21. A method of manufacturing a food product according to any preceding claim which includes the step of co-extruding the inner core and the or each layer.